# FASCICULE DE BREVET EUROPEEN

(11) **EP 1 361 411 B1**
(45) Date de publication et mention de la délivrance du brevet: **19.07.2006**
(21) Numéro de dépôt: 03101236.2
(22) Date de dépôt: 05.05.2003
(51) Int. Cl.: F42B 15/38

(54) **Dispositif de liaison provisoire et de séparation pyrotechnique de deux éléments, à organe mobile**
Vorrichtung mit bewegbarem Element, zur provisorischen Verbindung und zum pyrotechnischen Abtrennen von zwei Einheiten
Device with a mobile element, for provisionally connecting and pyrotechnically separating two units

(30) Priorité: 07.05.2002 FR 0205720
(43) Date de publication de la demande: 12.11.2003
(73) Titulaire: EADS SPACE Transportation SA, 75116 Paris (FR)
(72) Inventeur: Comtesse, Patrick, 78970, Mezieres sur Seine (FR)
(74) Mandataire: Poulin, Gérard

(56) Documents cités:
- EP-A- 0 905 022
- US-A- 3 362 290
- US-A- 6 142 424

## Description

### DOMAINE TECHNIQUE

L'invention concerne un dispositif apte à assurer une liaison provisoire entre deux éléments et utilisant un composition pyrotechnique commandant le déplacement d'un organe mobile, pour séparer ces éléments sans nécessiter la rupture d'une pièce quelconque.

Un tel dispositif peut notamment être utilisé dans les industries aéronautique et spatiale, pour commander en un temps très bref la séparation de deux éléments structurels, tout en assurant la transmission éventuelle d'efforts importants entre ces deux éléments, avant que la rupture ne soit effectuée.

### ETAT DE LA TECHNIQUE ANTERIEURE

Lorsque deux éléments entre lesquels passent des efforts doivent être séparés de façon irréversible, en un temps très bref, au moyen d'une commande à distance, on utilise couramment des dispositifs de séparation pyrotechnique intégrés dans la zone de jonction entre les deux éléments.

Les dispositifs de séparation pyrotechnique comprennent généralement un tube à expansion pyrotechnique, c'est-à-dire un tube métallique étanche et déformable, dans lequel circule un cordeau détonant. Un matériau souple tel que du caoutchouc est interposé entre le cordeau détonant et le tube qui l'enveloppe. Avant la mise à feu, le tube présente une section oblongue, par exemple en forme d'ellipse ou de cercle aplati.

Lorsque le cordeau détonant est mis à feu, l'onde de choc qui se propage à très grande vitesse le long du tube déforme celui-ci et tend à lui donner une section circulaire.

Dans les dispositifs de séparation pyrotechnique existants, le tube à expansion pyrotechnique est utilisé pour découper l'un des deux éléments selon une ligne de découpe donnée, afin de séparer les deux éléments l'un de l'autre.

Dans le cas où les éléments à séparer sont métalliques, il est connu de loger le tube à expansion pyrotechnique dans le fond d'un évidement à section en forme de U pratiqué dans l'un de ces éléments. L'autre élément est alors fixé dans l'entrée de cet évidement, par exemple au moyen de boulons ou analogues. La mise à feu du cordeau détonant provoque la cassure des deux branches latérales de l'élément évidé, selon des lignes définies par des zones d'épaisseur réduite. Les documents FR-A-2 598 796 et EP-A-0 273 061 illustrent des dispositifs de ce type.

Il est également connu, comme l'illustre le document US-A-4 137 848, de loger le tube à expansion pyrotechnique entre deux parties en vis-à-vis des éléments métalliques à séparer, en donnant à l'une desdites parties une épaisseur réduite. Les deux éléments sont reliés l'un à l'autre par des boulons ou analogues, d'un côté du tube et à proximité de celui-ci. La mise à feu du cordeau détonant provoque la cassure de la partie d'épaisseur réduite.

Le document US-A-3 362 290 décrit un agencement très proche de celui qui fait l'objet des documents FR-A-2 598 796 et EP-A-0 273 061. Toutefois, au lieu de provoquer la cassure de l'élément évidé, la mise à feu du cordeau détonant provoque, dans ce cas, le cisaillement des rivets servant à assembler les deux éléments, avant leur séparation. A cet effet, les rivets sont creux et de petit diamètre.

Lorsque les éléments à séparer sont des structures de type sandwich, il a été proposé de loger le tube à expansion pyrotechnique dans une partie de ces structures dépourvue d'âme alvéolaire. La mise à feu du cordeau détonant a alors pour effet de découper les parties du revêtement de la structure situées en face dudit tube. Des agencements de ce type sont décrits dans les documents FR-A-2 779 223 et FR-A-2 779 224.

Dans le document FR-A-2 779 222, il est décrit un agencement comparable, dans lequel les deux éléments sont reliés initialement l'un à l'autre par au moins une pièce de liaison collée. Lors de la mise à feu, l'expansion du tube provoque le décollement de la pièce de liaison et la séparation des deux éléments.

En résumé, tous les dispositifs connus de séparation pyrotechnique associés à des pièces métalliques réalisent la séparation desdites pièces en commandant la rupture de l'une d'entre elles ou le cisaillement des organes qui en assurent l'assemblage. Il en est généralement de même dans le cas des dispositifs associés à des pièces en matériaux composites.

La seule exception concerne le cas du dispositif décrit dans le document FR-A-2 779 222, dans lequel la découpe de l'un des deux éléments est remplacée par le décollement d'une pièce de liaison collée. Toutefois, ce type de dispositif ne peut être utilisé que pour relier des éléments en matériaux composites.

Le document EP-A-0 27 992 décrit un dispositif conforme au préambule de la revendication 1, dans lequel la composition pyrotechnique est constituée par une membrane gonflable reliée à un générateur pyrotechnique de gaz.

### EXPOSÉ DE L'INVENTION

L'invention a pour but la réalisation d'un dispositif de séparation pyrotechnique dont la conception originale lui permet de séparer des éléments en des matériaux quelconques, notamment métalliques, sans entraîner la rupture d'aucune pièce.

Conformément à l'invention, ce résultat est obtenu au moyen d'un dispositif de liaison provisoire et de séparation pyrotechnique conforme à la revendication 1.

Dans cet agencement, la liaison provisoire entre les deux éléments est assurée conjointement par les organes de liaison, qui sont en prise avec lesdits éléments lorsqu'ils occupent leur position d'assemblage, et par l'organe mobile, qui maintient les organes de liaison dans leur position d'assemblage tant que la composition pyrotechnique n'est pas mise en oeuvre.

Selon un mode de réalisation préféré de l'invention, les deux éléments sont cylindriques ou ovales et l'organe mobile comprend avantageusement une partie déformable qui entoure l'organe de liaison lorsque l'organe mobile occupe sa première position. Cette partie déformable est alors équipée de moyens de serrage.

De préférence, la partie déformable de l'organe mobile comprend des segments annulaires distincts dont chacun est relié en son centre à une partie principale de l'organe mobile, les moyens de serrage étant interposés entre des extrémités adjacentes des segments.

Les moyens de serrage peuvent notamment comprendre des organes de traction prenant appui sur des brides solidaires des extrémités adjacentes des segments.

Toujours selon le mode de réalisation préféré de l'invention, chaque organe de liaison comprend un cavalier comportant une face intérieure munie d'une première partie en saillie et d'une deuxième partie en saillie, reçues respectivement dans une première partie en creux formée sur le premier élément et dans une deuxième partie en creux formée sur le deuxième élément, lorsque l'organe de liaison est dans sa position d'assemblage.

Avantageusement, le dispositif comprend autant de cavaliers que de segments annulaires et chaque segment annulaire entoure l'un des cavaliers lorsque l'organe de liaison est dans sa position d'assemblage.

### BRÈVE DESCRIPTION DES DESSINS

On décrira à présent, à titre d'exemple illustratif et non limitatif, un mode de réalisation préféré de l'invention, en se référant aux dessins annexés, dans lesquels :
- la figure 1 est une vue en perspective qui représente une partie d'un dispositif de liaison provisoire et de séparation pyrotechnique conforme à l'invention, interposé entre deux éléments cylindriques placés bout à bout, l'un au-dessus de l'autre ;
- la figure 2 est une vue en coupe du dispositif de la figure 1, avant la mise en oeuvre de la composition pyrotechnique ; et
- la figure 3 est une vue en coupe comparable à la figure 2, représentant le dispositif après la mise en oeuvre de la composition pyrotechnique.

### EXPOSÉ DÉTAILLÉ D'UN MODE DE RÉALISATION PREFERE

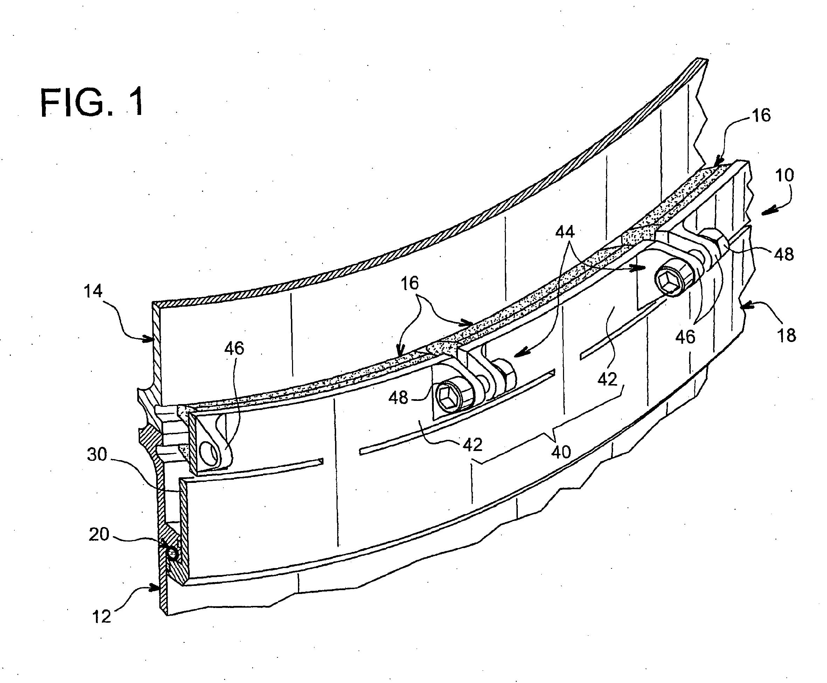

On a représenté sur les figures 1 à 3 un mode de réalisation préféré d'un dispositif 10 de liaison provisoire et de séparation pyrotechnique, placé entre un premier élément 12 et un deuxième élément 14.

Le premier élément 12 et le deuxième élément 14 sont constitués avantageusement soit comme deux éléments annulaires, sensiblement de même diamètre, comme l'illustrent les figures, soit par deux panneaux de formes ovales. Dans les deux cas, les éléments 12 et 14 sont prévus pour être assemblés bout à bout. Dans le mode de réalisation représenté, ils sont alors placés l'un au-dessus de l'autre.

Le dispositif 10 conforme à l'invention est situé dans la zone de liaison entre les deux éléments 12 et 14. Il comprend principalement au moins un organe de liaison 16, un organe mobile 18 et une composition pyrotechnique 20 de conception classique.

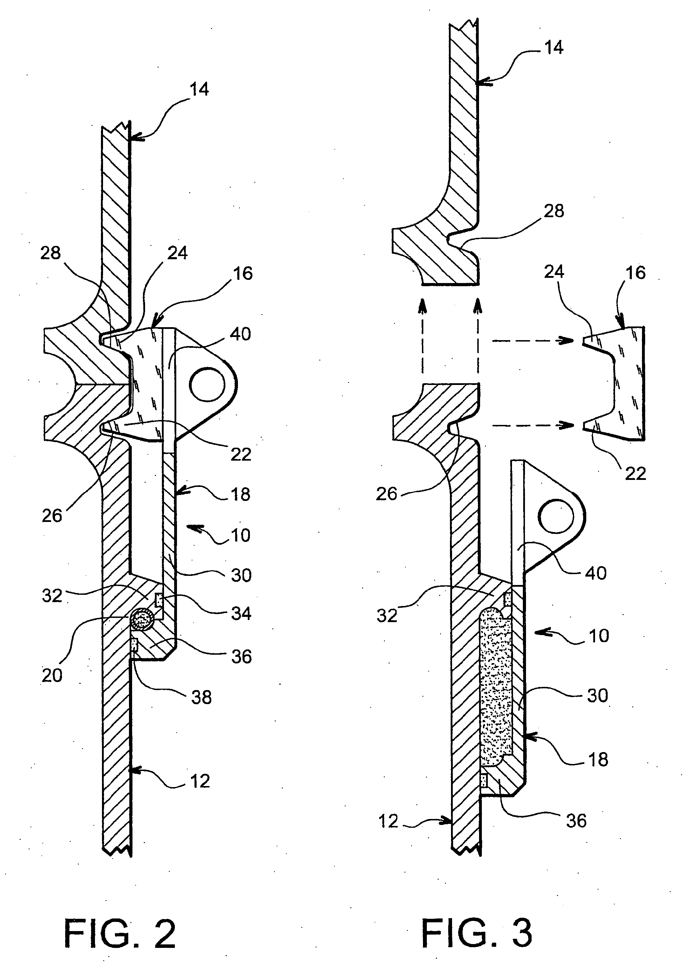

Dans le mode de réalisation représenté sur les figures, le dispositif 10 comprend plusieurs organes de liaison 16 disposés bout à bout sur toute la périphérie de la zone de liaison entre les éléments 12 et 14. Plus précisément, chacun des organes de liaison 16 est matérialisé par un cavalier qui chevauche les parties d'extrémité attenantes des éléments 12 et 14 et s'étend sur une partie de la circonférence de la zone de liaison. Dans la position normale d'assemblage représentée sur les figures 1 et 2, chacun des cavaliers est en prise simultanément avec l'élément 12 et avec l'élément 14, de telle sorte que lesdits éléments sont reliés l'un à l'autre de façon rigide.

De façon plus précise, chacun des cavaliers formés par les organes de liaison 16 comprend une face intérieure, tournée vers les éléments 12 et 14 et sur laquelle sont formées une première partie en saillie 22 et une deuxième partie en saillie 24. Lorsque les cavaliers sont dans leur position d'assemblage, la première partie en saillie 22 et la deuxième partie en saillie 24 sont normalement reçues dans une première partie en creux 26 et une deuxième partie en creux 28 formées respectivement dans les surfaces extérieures du premier élément 12 et du deuxième élément 14. Dans le mode de réalisation représenté, les parties en creux 26 et 28 sont des rainures annulaires formées à proximité des extrémités adjacentes des éléments 12 et 14.

Cet agencement assure la liaison rigide entre les éléments 12 et 14 lorsque les cavaliers matérialisant les organes de liaison 16 sont maintenus dans leur position d'assemblage par l'organe mobile 18, comme on le décrira par la suite.

Les cavaliers matérialisant les organes de liaison 16 présentent une surface extérieure lisse, de telle sorte que les surfaces extérieures de l'ensemble des cavaliers forment un cylindre de diamètre constant, lorsque les cavaliers occupent leur position d'assemblage.

L'organe mobile 18 est monté sur le premier élément 12 de façon à pouvoir coulisser sur celui-ci parallèlement à son axe.

Plus précisément, l'organe mobile 18 comprend une partie principale 30 en forme de virole cylindrique, qui entoure le premier élément 12 à proximité de son extrémité prévue pour être reliée au deuxième élément 14. La partie principale 30 de l'organe mobile 18 est apte à coulisser de façon étanche sur la surface extérieure d'un épaulement 32 qui fait saillie sur la surface extérieure du premier élément 12. A cet effet, un joint d'étanchéité 34 est monté sur la surface extérieure de l'épaulement 32 et en contact étanche avec la surface intérieure de la partie principale 30.

A son extrémité la plus éloignée du deuxième élément 14, la partie principale 30 de l'organe mobile 18 est équipée, sur sa surface intérieure, d'un épaulement 36. La surface intérieure de cet épaulement 36 est apte à coulisser de façon étanche sur la surface extérieure du premier élément 12. A cet effet, un joint d'étanchéité 38 est monté sur la surface intérieure de l'épaulement 36 et en contact étanche avec la surface extérieure du premier élément 12.

Les faces en vis-à-vis des épaulements 32 et 36 présentent des évidements de sections sensiblement semi-circulaires, de façon à définir entre eux un logement dans lequel est reçue la composition pyrotechnique 20. Lorsque les éléments 12 et 14 sont reliés l'un à l'autre par le dispositif 10 conforme à l'invention, l'organe mobile 18 occupe une première position, illustrée sur les figures 1 et 2. Dans cette première position, l'épaulement 36 de l'organe mobile 18 est pratiquement en appui contre l'épaulement 32 du premier élément 12.

A son extrémité opposée à l'épaulement 36, l'organe mobile 18 comprend une partie déformable 40. Dans la première position de l'organe mobile 18, illustrée sur les figures 1 et 2, la partie déformable 40 entoure les cavaliers matérialisant les organes de liaison 16.

Comme l'illustre plus précisément la figure 1, la partie déformable 40 de l'organe mobile 18 comprend une pluralité de segments annulaires 42. Les segments annulaires 42 sont disposés bout à bout sur toute la circonférence de la zone de jonction, tout en étant distincts ou séparés les uns des autres. Ils sont réalisés d'un seul tenant avec la partie principale 30, à laquelle ils sont reliés dans leur région centrale.

Lorsque l'organe mobile 18 occupe sa première position, la partie déformable 40 entoure étroitement les cavaliers matérialisant les organes de liaison 16. De façon plus précise, lorsque l'organe mobile est dans sa première position, le nombre des segments annulaires 42 est de préférence identique à celui des cavaliers matérialisant les organes de liaison 16 et chacun des segments 42 entoure étroitement l'un des cavaliers. Par conséquent la liaison rigide entre les éléments 12 et 14 est alors assurée.

Comme l'illustrent également la figure 1, la partie déformable 40 de l'organe mobile 18 est équipée de moyens de serrage 44. Ces moyens de serrage 44 permettent d'assurer le maintien de l'organe mobile 18 dans sa première position tant que la composition pyrotechnique 20 n'est pas mise en oeuvre. Ils permettent aussi de garantir la rigidité de la liaison ainsi assurée entre les éléments 12 et 14

Dans le mode de réalisation représenté, les moyens de serrage 44 sont interposés entre les extrémités adjacentes des segments annulaires 42.

De façon plus précise, chacune des extrémités circonférentielles des segments 42 est équipée d'une bride 46, sur sa face tournée vers l'extérieur par rapport aux éléments 12 et 14. Les moyens de serrage 44 sont alors matérialisés par des organes de traction tels que des boulons 48. Chacun des boulons 48 est orienté dans le sens de la circonférence des éléments 12 et 14 et prend appui sur deux brides 46 portées par les extrémités adjacentes de deux segments 42, en traversant des trous formés dans lesdites brides 46.

Grâce à l'agencement qui vient d'être décrit, il est possible de bloquer la partie déformable 40 de l'organe mobile 18 en serrant chacun des boulons 48. En effet, le serrage de chaque boulon 48 a pour effet de rapprocher les unes des autres les extrémités adjacentes des segments annulaires 42. Etant donné que les segments 42 ne sont reliés à la partie principale 30 de l'organe mobile 18 que dans leurs parties centrales, cela a pour effet de déformer les extrémités des segments 42 vers les organes de liaison 16 autour desquels se trouvent les segments. On réalise ainsi le blocage des segments 42 sur les organes de liaison 16, ce qui a pour effet, d'une part, d'immobiliser l'organe mobile 18 dans sa première position illustrée sur les figures 1 et 2 et, d'autre part, de relier rigidement entre eux les éléments 12 et 14, par l'intermédiaire des organes de liaison 16.

Lorsque le cordeau détonnant de la composition pyrotechnique 20 est mis à feu, les gaz libérés ont pour effet, comme l'illustre schématiquement la figure 3, de déplacer l'organe mobile 18 en éloignement du deuxième élément 14, c'est-à-dire vers le bas sur la figure 3. Le déplacement de l'organe mobile 18 a pour effet de décaler complètement la partie déformable 40 de celui-ci par rapport aux organes de liaison 16. La force de maintien exercée jusque là par les moyens de serrage 44 est instantanément supprimée et les organes de liaison peuvent donc se séparer des éléments 12 et 14, comme on l'a représenté sur la figure 3.

La mise à feu de la composition pyrotechnique 20 a donc pour effet de supprimer la liaison entre les éléments 12 et 14. Les éléments 12 et 14 sont ainsi séparés l'un de l'autre sans rupture d'aucune pièce. Par conséquent, les inconvénients découlant d'une telle rupture sont supprimés.

Bien entendu, l'invention n'est pas limitée au mode de réalisation qui vient d'être décrit à titre d'exemple. Ainsi, comme on l'a déjà mentionné, le dispositif selon l'invention peut également être utilisé pour relier, puis séparer des éléments de géométries différentes et notamment ovales.

## Revendications

1. Dispositif de liaison provisoire et de séparation pyrotechnique, comprenant une composition pyrotechnique (20) montée dans une zone de liaison entre deux éléments (12, 14) à séparer, au moins un organe de liaison (16) occupant normalement une position d'assemblage dans laquelle ledit organe de liaison est en prise simultanément avec chacun desdits éléments (12, 14), et un organe mobile (18) occupant normalement une première position, dans laquelle il maintient l'organe de liaison (16) dans sa position d'assemblage, la composition pyrotechnique (20) étant agencée de façon à déplacer l'organe mobile (18) dans une deuxième position, dans laquelle elle libère l'organe de liaison, lors d'une mise en oeuvre de ladite composition pyrotechnique (20), **caractérisé en ce que** l'organe mobile (18) est apte à coulisser sur un premier (12) desdits éléments, et la composition pyrotechnique (20) est logée entre deux épaulements (36, 32) formés respectivement sur l'organe mobile (18) et sur le premier élément (12), de telle sorte que l'organe de liaison (16) est emprisonné dans sa position d'assemblage lorsque ledit organe mobile (18) occupe sa première position et que la mise en oeuvre de la composition pyrotechnique (20) a pour effet de déplacer l'organe mobile (18) en éloignement du deuxième élément (14) et de libérer l'organe mobile (18).

2. Dispositif selon la revendication 1, dans lequel les deux éléments (12, 14) sont cylindriques ou ovales et l'organe mobile (18) comprend une partie déformable (40) qui entoure l'organe de liaison (16) lorsque l'organe mobile (18) occupe sa première position, ladite partie déformable (40) étant équipée de moyens de serrage (44).

3. Dispositif selon la revendication 2, dans lequel la partie déformable (40) de l'organe mobile (18) comprend des segments annulaires (42) distincts dont chacun est relié en son centre à une partie principale (30) de l'organe mobile (18), les moyens de serrage (44) étant interposés entre des extrémités adjacentes des segments (42).

4. Dispositif selon la revendication 3, dans lequel les moyens de serrage (44) comprennent des organes de traction (48) prenant appui sur des brides (46) solidaires des extrémités adjacentes des segments (42).

5. Dispositif selon l'une quelconque des revendications 2 à 4, dans lequel chaque organe de liaison (16) comprend un cavalier comportant une face intérieure munie d'une première partie en saillie (22) et d'une deuxième partie en saillie (24), reçues respectivement dans une première partie en creux (26) formée sur le premier élément (12) et dans une deuxième partie en creux (28) formée sur le deuxième élément (14), lorsque l'organe de liaison (18) est dans sa position d'assemblage.

6. Dispositif selon l'une quelconque des revendications 3 et 4, combinée avec la revendication 5, dans lequel ledit dispositif (10) comprend autant de cavaliers (16) que de segments annulaires (42), chaque segment annulaire (42) entourant l'un des cavaliers (16) lorsque l'organe de liaison (18) est dans sa position d'assemblage.

## Claims

1. Temporary connection and pyrotechnic separation device consisting of a pyrotechnic composition (20) installed in the connecting area between two elements (12, 14), to be separated, in which the device comprises in addition at least one connecting component normally occupying an assembled position in which said connecting component is simultaneously in contact with each of said elements (12, 14), and a moving part (18) normally occupying a first position in which it maintains the connecting component (16) in its assembled position, the pyrotechnic composition (20) being positioned in such a way as to displace the moving part (18) to a second position in which it releases the connecting component, when said pyrotechnic composition (20) is activated, **characterized in that** the moving part (18) is able to slide over a first (12) of said elements and the pyrotechnic composition (20) is housed between two shoulders (36, 32) formed on the moving part (18) and the first element (12) respectively, in such a way that the connecting element (16) is secured in its assembled position when the moving part (18) is in its first position and that the activation of the pyrotechnic composition (20) has the effect of displacing the moving part (18) away from the second element (14) and releasing the moving part (18).

2. Device according to claim 1, in which the two elements (12, 14) are cylindrical or oval and the moving part (18) comprises a deformable section (40) which encloses the connecting component (16) when the moving part (18) is in its first position, said deformable section (40) being equipped with clamping means (44).

3. Device according to claim 2, in which the deformable section (40) of the moving part (18) includes separate annular segments (42), each of which is connected at its centre to a principal section (30) of the moving part (18), the clamping means (44) being interposed between the adjacent ends of the segments (42).

4. Device according to claim 3, in which the clamping means (44) consist of tension devices (48) bearing on flanges (46) attached to the adjacent ends of the segments (42).

5. Device according to any one of claims 2 to 4, in which each connecting component (16) consists of a U-bracket comprising an inner face with a first projecting part (22) and a second projecting part (24) which are accommodated respectively in a first recessed section (26) formed in the first element (12) and in a second recessed section (28) formed in the second element (14), when the connecting component (18) is in its assembled position.

6. Device according to either of claims 3 and 4, combined with claim 5, in which said device (10) comprises as many U-brackets (16) as annular segments (42), with each annular segment (42) enclosing one of the U-brackets (16) when the connecting component (18) is in its assembled position.

## Patentansprüche

1. Vorrichtung zur provisorischen Verbindung und pyrotechnischen Trennung, mit einer pyrotechnischen Zusammensetzung (20), die in einem Verbindungsbereich zwischen zwei zu trennenden Elementen (12, 14) angeordnet ist, zumindest einem Verbindungsglied (16), das normalerweise eine Fügestellung einnimmt, in welcher das Verbindungsglied zugleich mit jedem der Elemente (12, 14) in Eingriff ist, und einem beweglichen Glied (18), das normalerweise eine erste Stellung einnimmt, in welcher es das Verbindungsglied (16) in seiner Fügestellung hält, wobei die pyrotechnische Zusammensetzung (20) so angeordnet ist, dass sie das bewegliche Glied (18) bei einem Einsatz der pyrotechnischen Zusammensetzung (20) in eine zweite Stellung verstellt, in welcher sie das Verbindungsglied freigibt, **dadurch gekennzeichnet, dass** das bewegliche Glied (18) an einem ersten (12) der Elemente gleiten kann und die pyrotechnische Zusammensetzung (20) zwischen zwei Schultern (36, 32) aufgenommen ist, die am beweglichen Glied (18) bzw. am ersten Element (12) ausgebildet sind, so dass das Verbindungsglied (16) in seiner Fügestellung eingeschlossen ist, wenn das bewegliche Glied (18) seine erste Stellung einnimmt, und dass der Einsatz der pyrotechnischen Zusammensetzung (20) dazu führt, das bewegliche Glied (18) vom zweiten Element (14) weg zu verstellen und das bewegliche Glied (18) freizugeben.

2. Vorrichtung nach Anspruch 1, wobei die beiden Elemente (12, 14) zylinderförmig oder oval sind und das bewegliche Glied (18) einen verformbaren Abschnitt (40) enthält, der das Verbindungsglied (16) umgibt, wenn das bewegliche Glied (18) seine erste Stellung einnimmt, wobei der verformbare Abschnitt (40) mit Spannmitteln (44) ausgestattet ist.

3. Vorrichtung nach Anspruch 2, wobei der verformbare Abschnitt (40) des beweglichen Glieds (18) verschiedene Ringsegmente (42) enthält, von denen jedes in seiner Mitte mit einem Hauptabschnitt (30) des beweglichen Glieds (18) verbunden ist, wobei die Spannmittel (44) zwischen den aneinandergrenzenden Enden der Segmente (42) eingefügt sind.

4. Vorrichtung nach Anspruch 3, wobei die Spannmittel (44) Zugglieder (48) enthalten, die sich an fest mit den aneinandergrenzenden Enden der Segmente (42) verbundenen Flanschen (46) abstützen.

5. Vorrichtung nach einem der Ansprüche 2 bis 4, wobei jedes Verbindungsglied (16) eine Klammer mit einer Innenseite enthält, die mit einem ersten vorspringenden Abschnitt (22) und einem zweiten vorspringenden Abschnitt (24) versehen ist, die in einer im ersten Element (12) ausgebildeten ersten Vertiefung (26) bzw. in einer im zweiten Element (14) ausgebildeten zweiten Vertiefung (28) aufgenommen sind, wenn das Verbindungsglied (18) sich in seiner Fügestellung befindet.

6. Vorrichtung nach einem der Ansprüche 3 und 4 in Kombination mit Anspruch 5, wobei die Vorrichtung (10) ebenso viele Klammern (16) wie Ringsegmente (42) enthält, wobei jedes Ringsegment (42) eine der Klammern (16) umgibt, wenn das Verbindungsglied (18) in seiner Fügestellung ist.
